# EUROPÄISCHE PATENTSCHRIFT

(11) **EP 0 698 530 B1**
(45) Veröffentlichungstag und Bekanntmachung des Hinweises auf die Patenterteilung: **15.03.2000**
(21) Anmeldenummer: 95106791.7
(22) Anmeldetag: 05.05.1995
(51) Int. Cl.: B60R 16/04, H02J 7/00, H01M 2/36

(54) **Automatisches Kupplungssystem für Fahrzeugbatterien**
Device for automatically plugging a car battery
Dispositif pour connecter automatiquement une batterie d'automobile

(30) Priorität: 29.07.1994 DE 9412219 U
(43) Veröffentlichungstag der Anmeldung: 28.02.1996
(73) Patentinhaber: VHB Industriebatterien GmbH, 58089 Hagen (DE)
(72) Erfinder: Bittihn, Rainer, Dr., D-58553 Halver (DE); Woeffler, Friedrich, D-58099 Hagen (DE); Sziksnus, Dieter, D-42349 Wuppertal (DE); Rinke, Hubert, D-58093 Hagen (DE)
(74) Vertreter: Köchling, Conrad, Dipl.-Ing.

(56) Entgegenhaltungen:
- DE-A- 4 225 013
- DE-A- 4 310 616
- DE-U- 9 114 909
- DE-U- 9 304 409
- GB-A- 2 183 081
- US-A- 4 413 219
- US-A- 4 435 486

## Beschreibung

Gegenstand der Erfindung ist eine Vorrichtung zum Ankuppeln einer Batterie an das Ladegerät in einer Wechselstation für mit austauschbaren Batterien ausgerüstete Elektrostraßenfahrzeuge oder an die Stromverbraucher des Fahrzeugs.

Elektrostraßenfahrzeuge haben bis heute trotz ihrer unbestreitbaren ökologischen Vorteile den Nachteil, daß größere Speicherkapazitäten der Batterien und damit ein annehmbarer Aktionsradius mit einem sehr hohen Gewicht der Batterie erkauft werden müssen. Ein rationeller Einsatz dieser Fahrzeuge ist jedoch mit auswechselbaren Batterien und durch Einrichtung von Batteriewechselstationen möglich, an denen ein Austausch von dort leer gefahrenen Batterien eines Fahrzeuges gegen aufgeladene Batterien vorgenommen werden kann. Dieser Batteriewechsel soll in möglichst kurzer Zeit erfolgen und erfordert daher eine besondere Technik. Die Traktionsbatterie muß dabei aus dem Fahrzeug herausgenommen und über eine Wechseleinrichtung auf einen Lagerplatz zur Wiederaufladung und Wartung abgestellt, eine neue von dort entnommen und in das Elektrofahrzeug eingeschoben werden.

Da es sich bei den Batterien, je nach Fahrzeugart, um erhebliche Gewichte handelt, wurden für die Elektro-Busse und Elektro-Transporter getrennt Wechseleinrichtungen entwickelt, die sich dadurch voneinander unterscheiden, daß bei den Elektro-Bussen die Wechseleinrichtungen und die Lade- und Wartungsplätze für die Batterien eine konstruktive Einheit bilden, während beim Elektro-Transporter das Auswechseln mittels beweglichen Wechselwagen zwischen dem Transporter und dem feststehenden Lade- und Wartungsplatz vorgenommen wird.

Eine Wechselstation für mit austauschbaren Akkumulatoren ausgerüstete Elektrostraßenfahrzeuge ist dem DE-Gbm 9305524.2 zu entnehmen. Diese Wechselstation wird demnach von einem handelsüblichen Container gebildet, dessen Inneres in einen Batterieraum mit Batteriewechselvorrichtung und einen die Ladegeräte enthaltenden Raum aufgeteilt ist. Dieser handelsübliche Container ist leicht von einem Einsatzort zum nächsten Einsatzort transportierbar und ermöglicht einen mobilen Einsatz. Ein wesentlicher Bestandteil der Batteriewechselvorrichtung ist dabei ein mit Teleskoparmen versehenes Rollenband, welches - nach Öffnen eines Rolltores am Containergehäuse - nach außen ausklappbar ist und die Verbindung zwischen dem Fahrzeug und dem Batterieraum herstellt.

Dieses Rollenband wird an ein im Elektrostraßenfahrzeug vorhandenes Rollenband, auf dem der Batterietrog ruht, mittels einer Einhängevorrichtung angekoppelt, wobei die Auszugslänge der Teleskoparme geringe unterschiedliche Distanzen zwischen beiden Rollenbändem ausgleicht.

Von der Batteriewechselvorrichtung, die als Hubtisch ausgebildet und selbst auf Schienen im Batterieraum seitlich verfahrbar ist, gelangt die Batterie auf ihren Abstell- oder Ladeplatz, indem der Hubtisch mit seiner vom Fahrzeug abgewandten Seite an eines der Batterie-Aufnahmeregale, die den rückwärtigen Batterieraum einnehmen, ankoppelt. Auch die Aufnahmeregale besitzen Rollenbänder, welche sich beim Andocken des Hubtisches in Bewegung setzen.

Der Fahrer kuppelt den Ladestecker mit der Batteriesteckdose und startet hierdurch den Ladevorgang (sowie bei Bedarf die automatische Wassemachfüllung).

Jeder Ladeplatz verfügt über optische Batteriezustandsanzeigen, die Batterieladung, Störung oder Volladung der Batterie anzeigen.

Zur Entnahme einer vollgeladenen Batterie wird ein Ladeplatz mit entsprechender Kontrollanzeige angesteuert. Alle Funktionsabläufe beim Ausfahren der geladenen Batterie sind die gleichen wie beim Einfahren der entladenen Batterie, umgekehrt ist nur die Drehrichtung der Rollenbänder.

Über eine Steckerkupplung wird die elektrische Verbindung zwischen Fahrzeugmotor und Fahrzeugelektrik und Batterie hergestellt. Die Bus-Heckklappe wird geschlossen und das Rolltor zugefahren; die Beleuchtung erlischt selbsttätig.

Kupplungsstecker, die in derartigen Stationen Verwendung finden können, sind beispielsweise im DE-Gbm 9003174 und im DE-Gbm 9114909 beschrieben.

Dem DE-Gbm 9003174 ist eine Vorrichtung zum Anschließen einer Traktionsbatterie mit Elektrolytumwälzung an eine Stromversorgungs- und an eine Druckgas-Quelle zu entnehmen, die eine Luftkupplung und eine elektrische Kupplung enthält, von welchen jeweils die Steckerteile und die Dosenteile mechanisch miteinander verbunden und beide Verbundteile unter gleichzeitiger Herstellung der pneumatischen Verbindung und der elektrischen Verbindung koppelbar sind.

Bei der Anschlußvorrichtung gemäß dem DE-Gbm 9114909 ist zum gleichzeitigen Anschließen einer Akkumulatorenbatterie an verschiedene Versorgungseinrichtungen (Ladegerät, Druckgasquelle für Elektrolytumwälzpumpe) das Steckerteil einer elektrischen Kupplung neben dem Steckanschluß einer Luftleitung auch mit einem Steckanschluß für eine Wasserzuführung mechanisch verbunden. Mit dem Verbundstecker korrespondiert ein entsprechendes Dosenteil. In beiden Fällen macht eine Grundplatte die Adaptierung der Stecker- und Dosenteile einer kombinierten Luft-/Wasserkupplung an die entsprechenden koppelbaren Teile einer elektrischen Normsteckvorrichtung möglich. Sämtliche Anschlüsse lassen sich aber auch in ein gemeinsames Gehäuse für das Steckerteil bzw. Dosenteil integrieren.

In der oben beschriebenen Wechselstation für Busbatterien werden die für die ordnungsgemäße Ladung der Batterie erforderlichen Steckverbindungen (Ladestrom, Luft für Säureumwälzung, Wassernachfüllung der Zellen, Wasser für Heizung bzw. Kühlung der Batterien und ggfs. Hilfskontakte) per Hand gesteckt.

Hierzu werden die Handstecker von der vollgeladenen Batterie gezogen, die danach in das Fahrzeug eingefahren wird, um dann in die aus dem Fahrzeug ausgefahrene leere Batterie gesteckt zu werden. Dieser manuelle Vorgang ist einerseits nicht frei von Fehlbedienungsmöglichkeiten und verzögert andererseits den Wechselvorgang.

Überdies ist das Betreten der räumlich extrem beengten Wechselstation zum manuellen Umstecken aller Steckverbindungen mit dem Risiko verbunden, Kleidung zu beschmutzen. Dies gilt insbesondere für z. B. uniformierte Busfahrer, die den Batteriewechselvorgang während einer kurzen Fahrpause selbst vollziehen.

Aufgabe der Erfindung ist es, eine einwandfreie und einfache Verbindung zwischen Batterie und Ladeplatz sowie Batterie und Fahrzeug zu gewährleisten.

Diese Aufgabe wird erfindungsgemäß durch die in Anspruch 1 gekennzeichnete Vorrichtung gelöst. In den Unteransprüchen sind vorteilhafte Ausgestaltungen der Erfindung wiedergegeben.

Dem aktuellen technischen Problem wird demnach dadurch abgeholfen, daß die für den Betrieb der Batterie erforderlichen Versorgungsleitungen, zu denen neben den Stromzuführungen auch Schläuche für die Zufuhr von Luft zum Zwecke der Elektrolytumwälzung, für die Wasserergänzung, ferner Leitungen oder Schläuche für den Zufluß und Abfluß eines Heiz- oder Kühlmediums zählen, in koppelbare Anschlußteile in Form von Steckern oder Buchsen einmünden, welche an einer gemeinsamen Leiste an der Batterie angeordnet sind, und daß auf Seiten der Ladestation oder am Ladegerät eine korrespondierende Leiste vorhanden ist, die einen simultanen Zusammenschluß aller entsprechenden Versorgungsstränge ermöglicht. Dabei ist durch präzise Abstände der Anschlüsse auf den Leisten dafür gesorgt, daß die Steckerteile exakt in die zugehörigen Buchsenteile eingreifen und sich mechanisch mit diesen verbinden.

Die stoßende Kraft der über ein Rollenband an den Ladeplatz heranfahrenden Batterie bewirkt die automatische Verkoppelung der Leisten-Anschlüsse.

Da in Batteriewechselanlagen nicht immer die gleiche Batterie einem bestimmten Ladeplatz zugeordnet ist, muß bei gegebenen Toleranzen eine exakte Ausrichtung der Stekkerleisten zueinander sichergestellt sein. Aus diesem Grund wird im Bereich der Toleranzen die Ladeplatz-Leiste beispielsweise über Federelemente nach allen Richtungen verschiebbar gehaltert. Dabei wird die exakte Positionierung der Anschlußleisten durch Führungsdome auf der einen Leiste, die in Führungsbuchsen auf der anderen Leiste eingreifen, gewährleistet.

Vorzugsweise sind die Buchsenteile aller Steckverbindungen auf der batterieseitigen Anschlußleiste angeordnet.

Anhand zweier Figuren folgt eine eingehende Beschreibung des erfindungsgemäßen Kupplungssystems.
- Figur 1: zeigt die batterieseitige Anschlußleiste
- Figur 2: zeigt die ladeplatzseitige Anschlußleiste

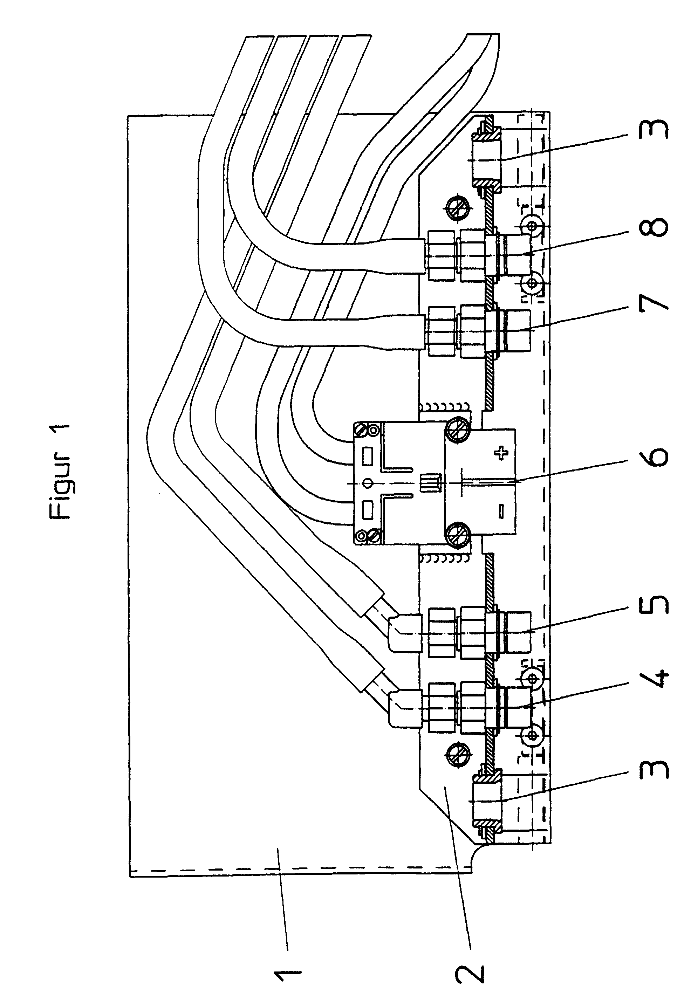

Nach Figur 1 ist auf einer Trägerplatte (1), welche an der - nicht dargestellten - Batterie befestigt ist, eine Profil (2) montiert, auf welches sich die Anschlüsse zur Versorgung der Batterie verteilen. Da es sich um die batterieseitigen Anschlüsse handelt, sind sie hier vorteilhaft als Buchsenteile ausgebildet.

Im einzelnen sind in dem Profil (2) Aufnehmungen für die Anschlüsse der Luftkupplung (4), eines Wassemachfüllsystems (5), ein elektrischer Anschluß (6) sowie Anschlüsse für ein Heiz- oder Kühlmedium vorgesehen, wobei letztere jeweils einen Vorlauf (7) und einen Rücklauf (8) benötigen. Die Anschlüsse werden in den Aufnehmungen mit Spiel montiert und sind über Kabel bzw. Schläuche mit der Batterie verbunden. Buchsen (3) dienen als Führungen zur Aufnahme des ladeplatzseitig montierten Leistengegenstücks mit den korrespondierenden Steckerteilen.

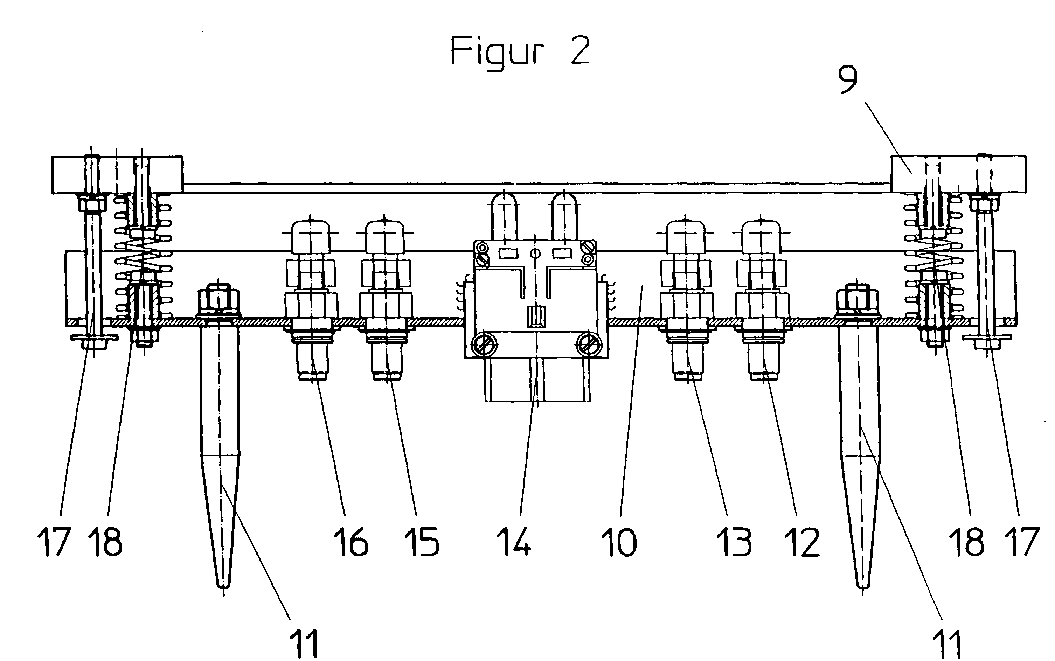

Nach Figur 2 ist auf die Trägerplatte (9) am Ladegerät, im Laderegal oder dergleichen (nicht dargestellt) mit den Halteschrauben (17) des Profil (10) fixiert, wobei das Profil (10) auf den Halteschrauben (17) in allen Richtungen verschiebbar ist. Das Profil (10) nimmt als Gegenstück zu Profil (2) den Steckanschluß (12) für die Luftkupplung, den Steckanschluß (13) für die Wassemachfüllung, das Steckerteil (14) für den elektrischen Anschluß und die ladeplatzseitigen Anschlüsse (15) und (16) für Kühl- und Heizwasser (Vor- und Rücklauf) auf. Durch die Fedem (18) wird beim Zusammenfahren der in Figur 1 und Figur 2 beschriebenen Steckerteile die zur sauberen Kontaktierung erforderliche Anpreßkraft gewährleistet. Die Führungsdome (11) greifen dabei in die Führungsbuchsen (3) ein und positionieren Steckerteile gegen Buchsenteile.

Um ein Abblasen von Luft oder ein Austreten von Wasser aus nicht zusammengefahrenen Steckerleisten zu unterbinden, ist es vorteilhaft, die entsprechenden Stecker (12,13,15,16) und Buchsen (4,5,7,8) selbstschließend auszubilden.

Weitere Vorteile für die erfindungsgemäße Vorrichtung ergeben sich dadurch, daß bei Verwendung handelsüblicher Stecker (6) zur Stromversorgung von Traktionsbatterien dort vorhandene Hilfskontakte für Temperaturmessung, Spannungsmessung und zur Batterieüberwachung genutzt werden können.

Das hier für die Batterieladung beschriebene automatische Steckerverbindungssystem kann in gleicher Weise auch zur Herstellung der Verbindung Fahrzeug/Batterie verwendet werden.

Die auf der Fahrzeugseite als Gegenstück zur Steckerleiste auf der Batterie montierte Steckerleiste ist vorzugsweise nur mit Steckelementen zur elektrischen Versorgung sowie mit den für die Batterieüberwachung erforderlichen Hilfskontakten bestückt.

Insbesondere ist es als vorteilhaft anzusehen, für die Verbindung Fahrzeug/Batterie auf der Batterie eine zweite Steckerleiste mit den für die Fahrzeugversorgung nötigen Verbindungselementen zu montieren, die gegenüber der Steckerleiste, die zur Ladung im Ladeplatz dient, um 180° gedreht ist. In diesem Fall kann wiederum die stoßende Kraft der auf dem Rollenband in das Fahrzeug einfahrenden Batterie die automatische Verkoppelung der Leitungsanschlüsse bewirken, ohne die schwere voluminöse Batterie selbst drehen zu müssen.

## Patentansprüche

1. Vorrichtung zum Ankuppeln einer Batterie an das Ladegerät in einer Wechselstation für mit austauschbaren Batterien ausgerüstete Elektrostraßenfahrzeuge oder an die Stromverbraucher des Fahrzeugs, dadurch gekennzeichnet, daß an die Batterie eine Anschlußleiste (2) befestigt ist, die Stecker oder Buchsen für den elektrischen Anschluß (6) und gegebenenfalls für eine Luftanschluß (4) sowie für eine Wassernachfüllvorrichtung (5) besitzt, und das am Ladeplatz in der Wechselstation eine entsprechend angepaßte Anschlußleiste (10) angeordnet ist, welche mit den jeweils zugeordneten Buchsen und Steckern versehen ist und welche zusätzliche Führungsdorne (11) aufweist, die mit entsprechenden Führungsöffnungen (3) der Batterieanschlußleiste korrespondieren und in diese beim Heranfahren der Batterie auf einer Rollenbahn eingreifen.

2. Vorrichtung nach Anspruch 1, dadurch gekennzeichnet, daß zusätzlich Anschlüsse für die Zuführung (15) und Abführung (16) eines Heiz- oder Kühlmediums vorgesehen sind.

3. Vorrichtung nach einem der Ansprüche 1 oder 2, dadurch gekennzeichnet, daß an der Batterieanschlußleiste eine Buchse (6) für die Stromzufuhr vorgesehen ist.

4. Vorrichtung nach einem der Ansprüche 1 bis 3, dadurch gekennzeichnet, daß in der Batterieanschlußleiste im Stecker (6) Hilfskontakte für Temperaturmessung, Spannungsmessung und Batterieüberwachung angeordnet sind.

5. Vorrichtung nach einem der Ansprüche 1 bis 4, dadurch gekennzeichnet, daß die Stecker (12,13,15,16) und Buchsen (4,5,7,8) der Anschlußleisten mit Spiel in den Anschlußleisten montiert sind.

6. Vorrichtung nach einem der Ansprüche 1 bis 5 dadurch gekennzeichnet, daß die Luft oder Wasser führenden Stecker (12,13,15,16) und Buchsen (4,5,7,8) selbstschließend ausgebildet sind.

7. Vorrichtung nach einem der Ansprüche 1 bis 6, dadurch gekennzeichnet, daß die Anschlußleiste (10) am Ladeplatz in allen Richtungen freigeweglich federnd gelagert ist.

8. Vorrichtung nach einem der Ansprüche 1 bis 7, dadurch gekennzeichnet, daß die Batterie zum Ankoppeln an das Fahrzeug mit einer zweiten Anschlußleiste versehen ist, die lediglich Anschlüsse für die Stromversorgung und gegebenenfalls Hilfskontakte besitzt.

## Claims

1. A device for coupling a battery to the charging device in a changing station for electric trams equipped with exchangeable batteries or to the current consumers of the vehicle,
**characterised in that** connected to the battery is a connection strip (2), which has plugs or sockets for the electrical connection (6) and where appropriate for an air connection (4) and also for a water refilling device (5),
**and in that** disposed at the charging site in the changing station is an appropriately adapted connection strip (10), which is provided with the respectively associated sockets and plugs and which has additional guide mandrels (11) corresponding with corresponding guide apertures (3) of the battery connection strip and engage therein when advancing the battery on a roller path.

2. A device according to Claim 1,
**characterised in that** connections for the supply (15) and removal (16) of a heating or cooling medium are additionally provided.

3. A device according to one of Claims 1 or 2,
**characterised in that** a socket (6) for the current supply is provided at the battery connection strip.

4. A device according to one of Claims 1 to 3,
**characterised in that** auxiliary contacts for temperature measurement, voltage measurement and battery monitoring are disposed in the battery connection strip in the plug (6).

5. A device according to one of Clams 1 to 4,
**characterised in that** the plugs (12, 13, 15, 16) and sockets (4, 5, 7, 8) of the connection strips are mounted with clearance in the connection strips.

6. A device according to one of Claims 1 to 5,
**characterised in that** plugs (12, 13, 15, 16) and sockets (4, 5, 7, 8) conveying air or water have an automatically closing construction.

7. A device according to one of Claims 1 to 6,
**characterised in that** the connection strip (10) is freely resiliently mounted at the charging site in all directions.

8. A device according to one of Claims 1 to 7,
**characterised in that** the battery for coupling to the vehicle is provided with a second connection strip which only has connections for the current supply and where appropriate auxiliary contacts.

## Revendications

1. Dispositif pour connecter une batterie au chargeur dans une station d'échange pour des véhicules routiers électriques équipés de batteries échangeables ou au consommateur de courant du véhicule,
**caractérisé** en ce qu'une réglette de connexion (2) est fixée sur la batterie, réglette qui possède des prises mâles ou femelles pour le branchement électrique (6) et éventuellement pour un branchement d'air (4) ainsi que pour un dispositif (5) de remplissage d'appoint d'eau, et en ce qu'une réglette de connexion correspondante (10) est disposée au poste de recharge de la station d'échange, réglette qui est pourvue des prises femelles et mâles respectivement associées et qui présente des goujons de guidage supplémentaires (11), qui correspondent à des ouvertures de guidage correspondantes (3) de la réglette de connexion de la batterie et s'engagent dans ces ouvertures lorsqu'on approche la batterie sur un transporteur à rouleaux.

2. Dispositif selon la revendication 1, **caractérisé** en ce que des branchements supplémentaires sont prévus pour l'alimentation (15) et l'évacuation (16) d'un agent de chauffage ou de refroidissement.

3. Dispositif selon la revendication 1 ou 2, **caractérisé** en ce qu'une prise femelle (6) pour l'alimentation en courant est prévue sur la réglette de connexion de la batterie.

4. Dispositif selon une des revendications 1 à 3, **caractérisé** en ce que des contacts auxiliaires sont disposés dans la réglette de connexion de la batterie, dans la prise mâle (6), pour la mesure de température, la mesure de tension et la surveillance de la batterie.

5. Dispositif selon une des revendications 1 à 4, **caractérisé** en ce que les prises mâles (12, 13, 15, 16) et les prises femelles (4, 5, 7, 8) des réglettes de connexion sont montées avec jeu dans les réglettes de connexion.

6. Dispositif selon une des revendications 1 à 5, **caractérisé** en ce que les prises mâles (12, 13, 15, 16) et femelles (4, 5, 7, 8) conduisant de l'air ou de l'eau sont réalisées à fermeture automatique.

7. Dispositif selon une des revendications 1 à 6, **caractérisé** en ce que la réglette de connexion (10) du poste de recharge est montée librement mobile dans toutes les directions sur ressort.

8. Dispositif selon une des revendications 1 à 7, **caractérisé** en ce que la batterie est pourvue, pour la connexion au véhicule, d'une deuxième réglette de connexion qui possède uniquement des branchements pour l'alimentation électrique, et éventuellement des contacts auxiliaires.
